(19) Europäisches Patentamt
European Patent Office
Office européen des brevets

(11) EP 2 657 258 A1

# (12) EUROPÄISCHE PATENTANMELDUNG

(43) Veröffentlichungstag:
**30.10.2013 Patentblatt 2013/44**

(51) Int Cl.:
***C08F 2/22*** *(2006.01)* ***C08L 55/02*** *(2006.01)*
***C08L 69/00*** *(2006.01)*

(21) Anmeldenummer: **12165141.8**

(22) Anmeldetag: **23.04.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Bayer MaterialScience AG**
**51373 Leverkusen (DE)**

(72) Erfinder: **Die Erfindernennung liegt noch nicht vor**

## (54) Verfahren zur Herstellung von ABS-Zusammensetzungen mit verbesserter Oberfläche nach Wärme-Feucht-Lagerung

(57) Die vorliegende Erfindung betrifft ein Verfahren zur Herstellung von Zusammensetzungen enthaltend im Emulsionspolymersiationsverfahren hergestellte vinylaromatische Copolymere mit herstellungsbedingten Salzinklusionen, die sich durch eine verbesserte Oberflächenqualität nach Wärme-Feucht-Lagerung auszeichnen und insofern zur Herstellung von Formkörpern mit alterungsstabil Defekt-freier Class A-Oberfläche eignen.

EP 2 657 258 A1

## Beschreibung

Die vorliegende Erfindung betrifft ein Verfahren zur Herstellung von Zusammensetzungen enthaltend im Emulsionspolymersiationsverfahren hergestellte vinylaromatische Copolymere mit herstellungsbedingten Salzinklusionen, die sich durch eine verbesserte Oberflächenqualität nach Wärme-Feucht-Lagerung auszeichnen und insofern zur Herstellung von Formkörpern mit alterungsstabil Defekt-freier Class A-Oberfläche eignen.

Die vorliegende Erfindung betrifft darüber hinaus die nach dem erfindungsgemäßen Verfahren hergestellten Zusammensetzungen und ihre Verwendung zur Herstellung von Formkörpern mit Class- A- Oberflächen- Anforderung und partiellem oder vollständigem Hochglanz- Finish, welche gegebenenfalls partiell oder vollständig einem weiteren Oberflächenbehandlungsschritt durch beispielsweise Lackierung, Folienhinterspritzung, Metallisierung durch Vakuumbedampfung oder Galvanisierung unterzogen sein können.

Im Emulsionspolymerisationsverfahren hergestellte vinylaromatische Copolymere enthaltende Zusammensetzungen, die herstellungsbedingt Salzinklusionen enthalten, sind literaturbekannt. Quellen für solche herstellungsbedingten Salzinklusionen sind mannigfaltig, beispielsweise im Emulsionspolymerisationsverfahren als Hilfsstoffe eingesetzte Emulgatorlösungen, Polymerisationsinitiatorlösungen, Pufferlösungen und Fällmittellösungen, welche bei der Aufarbeitung des Polymerisats je nach Verfahren im Material verbleiben oder aber nur unvollständig aus dem Material wieder entfernt werden.

Insbesondere die in traditionellen Verfahren, wie sie zum Beispiel in EP 459 161 B1, DE 2 021 398 und DE 28 15 098 in der Regel durchgeführte Fällung von in Emulsionspolymerisation hergestellten Vinylpolymerisatlatices mittels Zugabe von Säuren und/oder Salzen trägt in erheblichem Ausmaß zu der Salzfracht des finalen Polymers bei, da diese Salze im Allgemeinen durch nachgeschaltete Verfahrensschritte (Wäschen) nur unzureichend beziehungsweise mit hohem Aufwand (Energie und Wasser/Abwasser) wieder aus dem Produkt entfernt werden können. Als Koagulantien werden beispielsweise und bevorzugt wässrige Lösungen von wasserlöslichen Salzen wie beispielsweise Alkali-, Erdalkali- oder Aluminiumchloride, -sulfate, -nitrate, -phosphate, -acetate, -formiate, - aluminate oder -carbonate, besonders bevorzugt Aluminiumchlorid, Calciumchlorid und Magnesiumsulfat-Lösungen, gegebenenfalls in Kombination mit anorganischen oder organischen Säuren wie beispielsweise Salzsäure, Schwefelsäure, Phosphorsäure, Borsäure, Ameisensäure, Essigsäure, Propionsäure und Zitronsäure verwendet.

In der Literatur wird beschrieben, dass solche Salzinklusionen in vinylaromatische Copolymere enthaltenden Zusammensetzungen zu unerwünschten Effekten führen können.

WO 2009/071537 beispielsweise offenbart, dass Magnesium- und/ oder Calciumverbindungen in schlagzähmodifizierten vinylaromatischen Copolymeren ausgewählt aus der Gruppe der AcrylnitrilButadien- Styrol- Copolymere (ABS), Acrylnitril- Styrol- Acrylat- Copolymere (ASA) und Methacrylat- Acrylnitril- Butadien- Styrol- Copolymere (MABS), optional enthaltend Polycarbonat und Zusatzstoffe, bei der thermoplastischen Formgebung durch Spritzguss oder Extrusion zu unerwünschter Belagsbildung am Formgebungswerkzeug führen und beansprucht insofern solche Zusammensetzungen mit einem Gehalt an Magnesium- und/ oder Calciumverbindungen von 0 mg/kg bis 100 mg/kg. Die in diesen Zusammensetzungen zum Einsatz kommenden Emulsionspolymerisate werden statt durch Zugabe von Magnesiumsulfatlösung wie traditionell üblich durch Gefrierfällung auf einer Scherbeneismaschine gefällt.

WO 98/28344 offenbart ein Verfahren zur kontinuierlichen Koagulation von wässrigen Dispersionen von Pfropfkautschuken durch Scherung, welches den bekannten Nachteil der Fällung mittels Säuren und/oder Salzen als Koagulantien, dass oft Verunreinigungen in den aufgearbeiteten Polymeren verbleiben, die zu einer Beeinträchtigung der Produkteigenschaften führen können, überwindet.

Ein Problem von thermoplastischen Zusammensetzungen enthaltend im Emulsionspolymersiationsverfahren hergestellte vinylaromatische Copolymere mit herstellungsbedingten Salzinklusionen ist es, dass aus ihnen hergestellte Formteile bei Exposition gegenüber Feuchtigkeit (beispielsweise Kondenswasser oder Luftfeuchte), insbesondere bei erhöhten Temperaturen, zur unerwünschten Ausbildung von Oberflächendefekten (Bläschenbildung) neigen, welche den Einsatz solcher Zusammensetzungen in Formteilen mit Hochglanz-Finish und Class A-Oberflächenanforderung einschränken.

EP 2 398 842 A1 offenbart ein Compoundierungsverfahren zur Herstellung schlagzähmodifizierter Polycarbonatzusammensetzungen mit reduziertem Gehalt an flüchtigen organischen Verbindungen, in welchem dem als Schlagzähmodifikator eingesetzten pulverförmigen Pfropfpolymersiat 2 bis 40 Gew.- %, bezogen auf die Summe aus Schlagzähmodifikator und Wasser, an flüssigem Wasser zugesetzt wird und die so hergestellte Vormischung bei der Compoundierung der schlagzähmodifizierter Polycarbonatzusammensetzungen zum Einsatz kommt. Dieses Verfahren entspricht einem Vergleichsbeispiel in dieser Anmeldung.

Die Aufgabe der vorliegenden Erfindung bestand somit darin, ein Verfahren bereitzustellen, welches die Herstellung thermoplastischen Zusammensetzungen erlaubt, enthaltend im Emulsionspolymersiationsverfahren hergestellte vinylaromatische Copolymere mit herstellungsbedingten Salzinklusionen, die sich durch eine verbesserte Oberflächenqualität nach Wärme-Feucht-Lagerung auszeichnen und insofern zur Herstellung von Formkörpern mit alterungsstabil visuell Defekt-freier Class A-Oberfläche eignen.

Unter "visuell Defekt-freie Class A-Oberflächen" im Rahmen der vorliegenden Erfindung sind dabei Oberflächen zu verstehen, die keine Bläschen mit einer mit bloßem Auge als störend empfundenen Anzahl und Durchmesser aufweisen. Vorzugsweise weisen solche "visuell Defekt-freie Class A-Oberflächen" eine relative Fläche an Defekten mit Blasentopographie bezogen auf die untersuchte Oberflächengröße ($A_{rel}$) von kleiner als 50 ppm, bevorzugt von kleiner als 30 ppm, besonders bevorzugt von kleiner als 20 ppm auf.

Weiterhin weisen diese Oberflächen in bevorzugter Ausführungsform keine Bläschen mit einem Durchmesser von größer als 300 $\mu$m.

Solche visuell Defekt-freien Class A-Oberflächen weisen jedoch dennoch häufig Bläschen auf, die mit optischen Hilfsmitteln, z. B. Lupe oder Mikroskop, sichtbar sind. Die relative Fläche an Defekten mit Blasentopographie bezogen auf die untersuchte Oberflächengröße ($A_{rel}$) beträgt bevorzugt 0,1 bis 50 ppm, besonders bevorzugt 1 bis 30 ppm, besonders bevorzugt 3 bis 20 ppm. Die maximale Defektgröße, das heißt der Durchmesser der größten auf solchen visuell Defekt-freien Class-A-Oberflächen gefundenen Defekte mit Bläschentopografie, liegt vorzugsweise in einem Bereich von 10 $\mu$m bis 300 $\mu$m.

Überraschenderweise wurde nun gefunden, dass diese Aufgabe erfüllt wird durch ein Verfahren, zur Herstellung von Zusammensetzungen enthaltend

A) 0 bis 98 Gew.-Teile, bevorzugt 1 bis 95 Gew.-Teile, insbesondere 30 bis 85 Gew.-Teile, bezogen auf die Summe aus A und B, eines oder eine Mischung mehrerer thermoplastischer Polymere verschieden von B und

B) 2 bis 100 Gew.-Teile, bevorzugt 5 bis 99 Gew.-Teile, besonders bevorzugt 15 bis 70 Gew.-Teile, bezogen auf die Summe aus A und B, aus

B1) mindestens einem im Emulsionspolymersiationsverfahren hergestellten Pfropfpolymerisat,
B2) optional mindestens einem im Masse-, Suspensions- oder Lösungspolymeriationsverfahren hergestellten Pfropfpolymerisat,
B3) optional mindestens einem kautschukfreien Vinyl (co) polymerisat, und

C) 0 bis 30 Gew.-Teile, bevorzugt 0,1 bis 20 Gew.-Teile, insbesondere 0,3 bis 7 Gew.-Teile, bezogen auf die Summe auf A und B, mindestens eines handelsüblichen Polymeradditivs, wobei sich die Summe der Gewichtsteile A und B zu 100 addiert,

dadurch gekennzeichnet, dass

(i) die Komponente B, bevorzugt die Komponente B 1 oder ein Präcompound aus Komponente B1 mit mindestens einer der Komponenten B2 und B3 oder mit einer Teilmenge mindestens einer der Komponenten B2 und B3, besonders bevorzugt ein Präcompound aus Komponente B1 und der Gesamt- oder einer Teilmenge der Komponente B3, mindestens ein anorganisches Salz, bestehend aus einem Kation ausgewählt aus der Gruppe der Alkalimetalle, Erdalkalimetalle und Aluminium und einem Anion ausgewählt aus der Gruppe bestehend aus Chlorid, Sulfat, Nitrat, Phosphat, Acetat und Formiat, in einer Konzentration des Salzes oder der Salzmischung von 100 bis 5000 mg/kg, bevorzugt von 150 bis 2000 mg/kg, besonders bevorzugt von 200 bis 1000 mg/kg, bezogen auf die Zusammensetzung, enthält und

dadurch gekennzeichnet, dass

a) in einem ersten Verfahrensschritt die gesamte das Salz enthaltende Komponente(n) vollständig durch Kontakt mit flüssigem Wasser oder in einer alternativen und bevorzugten Ausführungsform durch Exposition mit einer Wasserdampf enthaltenden Atmosphäre mit in bevorzugter Ausführungsform einer relativen Luftfeuchtigkeit von mindestens 40 %, weiter bevorzugt mindestens 70 %, besonders bevorzugt mindestens 90 % mit Wasser beaufschlagt wird,

b) in einem zweiten Verfahrensschritt die so mit Wasser beaufschlagte(n) Komponente(n) aufgeschmolzen und im aufgeschmolzenen Zustand geknetet werden und

c) gegebenfalls in einem dritten Verfahrensschritt die so präparierte Komponente mit den restlichen Komponenten der Zusammensetzung gemischt, die Mischung erneut aufgeschmolzen, geknetet und die Komponenten der Mischung dadurch ineinander dispergiert werden,

wobei mindestens in einem der Schritte b) oder c) ein Unterdruck von bevorzugt mindestens 200 mbar, weiter bevorzugt

von mindestens 500 mbar, besonders bevorzugt von mindestens 800 mbar angelegt wird und dadurch das im Verfahrensschritt a) in das Verfahren eingebrachte Wasser wieder aus dem Produkt entfernt wird.

Unter der relativen Luftfeuchtigkeit der Wasserdampf enthaltenden Atmosphäre wird das prozentuale Verhältnis aus Wasserdampfkonzentration in der Atmosphäre und Wasserdampfsättigungskonzentration bei den jeweiligen Umgebungsbedingungen (Temperatur und Druck) verstanden. Sie wird ermittelt mit einem handelsüblichen Hygrometer, beispielsweise mit elektrischem Feuchtigkeitssensor.

In einer alternativen und bevorzugten Ausführungsform wird die Gesamtheit der Komponenten A und C sowie die Restmengen der Komponente B der Zusammensetzung bereits im Verfahrensschritt (b) zugesetzt, durch den Knetvorgang ineinander dispergiert und das im Verfahrensschritt a) in das Verfahren eingebrachte Wasser durch Anlegen eines Unterdrucks von bevorzugt von mindestens 200 mbar, weiter bevorzugt von mindestens 500 mbar, besonders bevorzugt von mindestens 800 mbar wieder aus dem Produkt entfernt wird.

In einem letzten Schritt d) wird die Zusammensetzung generell anschließend wieder abgekühlt und granuliert.

Vorzugsweise beträgt die Expositionzeit der das Salz enthaltenden Komponente(n) B oder nur der das Salz enthaltenden Komponente B1, oder des das Salz enthaltende Präcompound aus Komponente B1 mit mindestens einer der Komponenten B2 und B3 oder mit einer Teilmenge mindestens einer der Komponenten B2 und B3, mit Wasser oder Wasserdampf mindestens 10 h , bevorzugt mindestens 20 h, besonders bevorzugt mindestens 40 h. In ebenfalls bevorzugter Ausführungsform beträgt die Expositionszeit nicht länger als 500 h, bevorzugt nicht länger als 200 h, besonders bevorzugt nicht länger als 100 h. Bevorzugt wird die das Salz enthaltende Komponente(n) B, oder nur die das Salz enthaltende Komponente B1, oder der das Salz enthaltende Präcompound aus Komponente B1 mit mindestens einer der Komponenten B2 und B3 oder mit einer Teilmenge mindestens einer der Komponenten B2 und B3 als Granulat eingesetzt.

Die Beaufschlagung mit flüssigem Wasser kann grundsätzlich in jeder Art offen oder geschlossen betriebenem Aggregat, Gefäß, Silo oder Behältnis erfolgen. Nach erfolgtem, für eine vollständige Penetration der Granulatkörner ausreichend langem Kontakt mit dem flüssigem Wasser wird das Granulat in bevorzugter Ausführungsform vor die Einbringung in den Verfahrensschritt b) abgeseiht und danach in weiter bevorzugter Ausführungsform, beispielsweise durch Abblasen mit bevorzugt trockener, gegebenenfalls erwärmter Luft, bis zur Entfernung von nach dem Abseihungsschritt verbleibender, die Granulatkörner benetzender Restmengen an flüssigem Wasser getrocknet. Letzteres hat den Vorteil einer verbesserten Dosierfähigkeit der so behandelten Granulate in den Verfahrensschritten b) und gegebenenfalls c).

Die Beaufschlagung mit Wasserdampf enthaltender Atmosphäre kann grundsätzlich ebenfalls in jeder Art Aggregat, Gefäß, Silo oder Behältnis erfolgen. Beispielsweise geeignet sind hierfür Klimaschränke oder klimatisierte Silos. In einer bevorzugten technischen Ausführungsform erfolgt die Beaufschlagung mit Wasserdampf enthaltender Atmosphäre in verfahrenstechnischen Aggregaten, wie sie aus der Trocknung von Kunststoffgranulaten oder anderen Stoffen grundsätzlich aus dem Stand der Technik bekannt sind. Beispielsweise genannt seien hier Umlufttrockner, welche statt mit trockener Warmluft mit Wasserdampf oder aber mit Wasserdampf versetzter, gegebenenfalls erwärmter Luft kontinuierlich beschickt werden, oder aber in im Gegenstrom oder Kreuzstrom relativ zum Granulatfluss mit Wasserdampf oder aber mit Wasserdampf versetzter gegebenenfalls erwärmter Luft kontinuierlich beschickten Silos.

Weiter bevorzugt beträgt der Wassergehalt der das Salz enthaltende Komponente(n) B, oder nur der das Salz enthaltenden Komponente B 1,oder des das Salz enthaltenden Präcompounds aus Komponente B1 mit mindestens einer der Komponenten B2 und B3 oder mit einer Teilmenge mindestens einer der Komponenten B2 und B3 nach Verfahrensschritt a) 0,10 bis 1,80 Gew.-%, noch weiter bevorzugt von 0,15 bis 1,50 Gew.-% und besonders bevorzugt von 0,20 bis 1,20 Gew.-% bezogen auf die Komponente(n) B, bzw. die jeweilige(n) der Wasserbeaufschlagung unterzogenen Teilkomponente(n).

Bevorzugt ist das Salz ein Alkali-, Erdalkali- oder Aluminiumchlorid oder ein Alkali-, Erdalkali- oder Aluminiumsulfat, oder eine Mischung daraus, besonders bevorzugt ist das Salz ausgewählt aus der Gruppe bestehend aus Aluminiumchlorid, Calciumchlorid und Magnesiumsulfat, oder Mischungen daraus, ganz besonders bevorzugt ist das Salz Magnesiumsulfat.

In einer bevorzugten Ausführungsform besteht die Zusammensetzung nur aus den Komponenten A, B und C.

In einer weiteren bevorzugten Ausführungsform besteht die Komponente B aus mindestens zwei Komponenten ausgewählt aus der Gruppe bestehend aus B1, B2 und B3, weiter bevorzugt aus den Komponenten B1 und B3, besonders bevorzugt aus B1, B2 und B3.

Das anorganische Salz wird bevorzugt über die Komponente B 1 in die Zusammensetzung eingebracht, welches das Salz bevorzugt als herstellungsbedingte Verunreinigung enthält. Die Komponente B1 enthält das Salz bevorzugt in einer Konzentration von 100 bis 10000 mg/kg, bevorzugt von 150 bis 3000 mg/kg, besonders bevorzugt von 200 bis 1500 mg/kg, bezogen auf die Zusammensetzung.

Der Gehalt an anorganischem Salz wird über die Anionengehalte an Chlorid, Sulfate, Nitrat, Phosphat, Acetat, oder Formiat, bevorzugt Chlorid oder Sulfat, besonders bevorzugt Sulfat ermittelt. Eine solche Bestimmung erfolgt nach geeignetem Materialaufschluss ionenchromatographisch über Leitfähigkeitsmessung gemäß dem in den Beispielen

beschriebenen Verfahren zur Bestimmung des Magnesiumsulfatgehaltes.

Die Beaufschlagung mit flüssigemWasser erfolgt bevorzugt in einem Temperaturintervall von 5 bis 95°C, weiter bevorzugt von 10 bis 90 °C und besonders bevorzugt von 20 bis 85 °C.

Die Beaufschlagung mit Wasserdampf enthaltender Atmosphäre erfolgt bevorzugt in einem Temperaturintervall von 20 bis 95°C, weiter bevorzugt von 30 bis 90 °C und besonders bevorzugt von 40 bis 85 °C. Dabei sind die Vorzugsbereiche für die Prozesstemperaturen im Verfahrensschritt a) nach oben dadurch begrenzt, dass oberhalb 85°C, die Granulate mit zunehmender Temperatur in zunehmendem Maße zur Erweichung und dadurch zur Verklebung neigen und dadurch ihre Dosierfähigkeit in den weiteren Verfahrensschritten b) und gegebenenfalls c) nachteilig beeinflusst wird oder aber weitere Verfahrensschritte notwendig sind, um die Granulate wieder in eine dosierfähige Form zu bringen.

In weiter bevorzugter Ausführungsform erfolgt die Beaufschlagung mit Wasserdampf enthaltender Atmosphäre bei einer Temperatur von 20 bis 95°C und bei einer relativen Luftfeuchtigkeit von mindestens 70%, besonders bevorzugt bei einer Temperatur von 40 bis 85°C und bei einer relativen Luftfeuchtigkeit von mindestens 90%. Aufgrund der hohen Luftfeuchte und der hohen Temperatur ist nur eine vergleichsweise kurze Expositionszeit erforderlich, so daß kurzfristig auch oberhalb des Erweichungspunktes gearbeitet werden kann, ohne die Granulate irreversibel zu verkleben.

Vorteilhaft bei diesem Verfahren ist einerseits die einfachere weitgehende, in bevorzugter Ausführungsform ausschließliche Handhabung der Komponente B und deren Bestandteile in Form von Granulaten gegenüber Pulvern, die zu Verklebungen neigen und auch Explosionsneigung aufweisen, andererseits auch die Möglichkeit, ABS in Granulatform mit hoher herstellungsbedingter Salzfracht ohne weitere aufwendige Reinigungsschritte wie Waschen oder Schmelzefiltration zur Herstellung von Class A-Oberflächenbauteilen zu verwenden.

Unter "Granulat" im Sinne der Erfindung wird eine Komponente oder eine Mischung aus mehreren Komponenten verstanden, die im festen Aggregatszustand vorliegt, wobei die festen Partikel eine Teilchengröße von mindestens 2 mm und im allgemeinen von nicht mehr als 10 mm aufweisen. Die Granulatkörner können beliebige Form aufweisen, beispielsweise Linsenform, Kugelform oder Zylinderform.

Unter "Pulver" oder "pulverförmig" im Sinne der Erfindung wird eine Komponente oder eine Mischung aus mehreren Komponenten verstanden, die im festen Aggregatszustand vorliegt und bei denen die Partikel Teilchengrößen von kleiner als 2 mm, bevorzugt von kleiner als 1 mm, insbesondere von kleiner als 0,5 mm aufweisen.

**Komponente A**

Als Komponente A kommen grundsätzlich alle Arten von Komponente B verschiedener thermoplastischer Polymere oder Mischungen aus zwei oder mehr als zwei solcher thermoplastischer Polymere in Frage.

Beispielhaft seien hier genannt Polyolefine (wie Polyethylen und Polypropylen), thermoplastische Polyurethane, Polyacetale (wie Polyoxymethylen und Polyphenylenether), Polyamide, Polyimide, Polycarbonate, Polyester, Polyestercarbonate, Polysulfone, Polyarylate, Polyarylether, Polyphenylenether, Polyarylsulfone, Polyarylsulfide, Polyethersulfone, Polyphenylensulfid, Polyetherketone, Polyamidimide, Polyetherimide und Polyesterimide.

Besonders bevorzugt kommt als Komponente A mindestens ein Polymer ausgewählt aus der Gruppe bestehend aus Polycarbonat, Polyestercarbonat und Polyester, besonders bevorzugt mindestens ein Polymer ausgewählt aus der Gruppe bestehend aus aromatischem Polycarbonat, aromatischem Polyestercarbonat und aromatischem Polyester, ganz besonders bevorzugt ein Polymer ausgewählt aus der Gruppe bestehend aus aromatischem Polycarbonat und aromatischem Polyestercarbonat zum Einsatz.

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I)

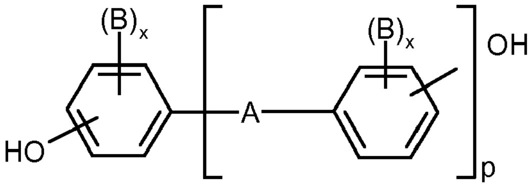

(I),

wobei

A eine Einfachbindung, C1 bis C5-Alkylen, C2 bis C5-Alkyliden, C5 bis C6-Cycloalkyliden, -O-, -SO-, -CO-, -S-, -SO2-, C6 bis C12-Arylen, an das weitere aromatische gegebenenfalls Heteroatome enthaltende Ringe kondensiert sein können,
oder ein Rest der Formel (II) oder (III)

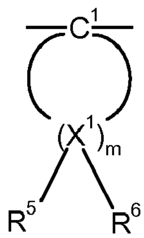

(II)

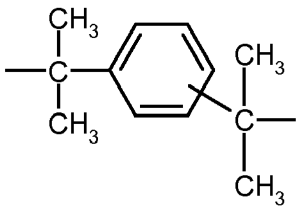

(III)

B jeweils C1 bis C12-Alkyl, vorzugsweise Methyl, Halogen, vorzugsweise Chlor und/oder Brom

x jeweils unabhängig voneinander 0, 1 oder 2,

p 1 oder 0 sind, und

R5 und R6 für jedes X1 individuell wählbar, unabhängig voneinander Wasserstoff oder C1 bis C6-Alkyl, vorzugsweise Wasserstoff, Methyl oder Ethyl,

X1 Kohlenstoff und

m eine ganze Zahl von 4 bis 7, bevorzugt 4 oder 5 bedeuten, mit der Maßgabe, dass an mindestens einem Atom X1, R5 und R6 gleichzeitig Alkyl sind.

Bevorzugte Diphenole sind Hydrochinon, Resorcin, Dihydroxydiphenole, Bis- (hydroxyphenyl)- C1- C5- alkane, Bis- (hydroxyphenyl)- C5- C6- cycloalkane, Bis- (hydroxyphenyl)- ether, Bis- (hydroxyphenyl)- sulfoxide, Bis- (hydroxyphenyl)- ketone, Bis- (hydroxyphenyl)- sulfone und α, α- Bis- (hydroxyphenyl)- diisopropyl- benzole sowie deren kernbromierte und/ oder kernchlorierte Derivate.

Besonders bevorzugte Diphenole sind 4, 4'- Dihydroxydiphenyl, Bisphenol- A, 2, 4- Bis (4- hydroxyphenyl)- 2-methylbutan, 1, 1- Bis- (4- hydroxyphenyl)- cyclohexan, 1, 1- Bis- (4- hydroxyphenyl)- 3 . 3 . 5- trimethylcyclohexan, 4, 4'- Dihydroxydiphenylsulfid, 4, 4'- Dihydroxydiphenylsulfon sowie deren di- und tetrabromierten oder chlorierten Derivate wie beispielsweise 2, 2- Bis (3- Chlor- 4- hydroxyphenyl)- propan, 2, 2- Bis- (3, 5- dichlor- 4- hydroxyphenyl)- propan oder 2, 2- Bis- (3, 5- dibrom- 4- hydroxyphenyl)- propan. Insbesondere bevorzugt ist 2, 2- Bis- (4- hydroxyphenyl)- propan (Bisphenol- A) .

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p- Chlorphenol, p- tert.- Butylphenol oder 2, 4, 6- Tribromphenol, aber auch langkettige Alkylphenole, wie 4- [2- (2, 4, 4- Trimethylpentyl) ]- phenol, 4- (1, 3- Tetramethylbutyl)- phenol gemäß DE- A 2 842 005 oder Monoalkylphenol oder Dialkylphenole mit insgesamt 8 bis 20 Kohlenstoffatomen in den Alkylsubstituenten, wie 3, 5- di- tert.-Butylphenol, p- iso- Octylphenol, p- tert.- Octylphenol, p- Dodecylphenol und 2- (3, 5- Dimethylheptyl)- phenol und 4-(3, 5- Dimethylheptyl)- phenol. Die Menge an einzusetzenden Kettenabbrechern beträgt im allgemeinen zwischen 0, 5 Mol%, und 10 Mol%, bezogen auf die Molsumme der jeweils eingesetzten Diphenole.

Die thermoplastischen, aromatischen Polycarbonate haben bevorzugt mittlere Gewichtsmittelmolekulargewichte (Mw, gemessen durch Gelpermeationschromatographie in Methylenchlorid bei 25°C mit Polycarbonat als Standard) von 20.000 bis 40.000 g/mol, vorzugsweise 22.000 bis 35.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol- A- Homopolycarbonaten die Copolycarbonate von Bisphenol- A mit bis zu 15 Mol%, bezogen auf die Molsummen an Diphenolen, anderen als bevorzugt oder besonders bevorzugt genannten Diphenolen, insbesondere 2, 2- Bis (3, 5- dibrom- 4- hydroxyphenyl)- propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether- 4, 4'- dicarbonsäure und der Naphthalin- 2, 6- dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C1 bis C22-Alkylgruppen oder durch Halogenatome substituiert sein können, sowie aliphatische C2 bis C22-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3, 3'-, 4, 4'- Benzophenon- tetracarbonsäuretetrachlorid, 1, 4, 5, 8- Napthalintetracarbon- säuretetrachlorid oder Pyromellithsäuretetrachlorid, in Mengen von 0, 01 bis 1, 0 Mol% (bezogen auf eingesetzte Dicarbonsäuredichloride) oder drei- oder mehrfunktionelle Phenole, wie Phloroglucin, 4, 6- Dimethyl- 2, 4, 6-tri- (4- hydroxyphenyl)- hept- 2- en, 4, 6- Dimethyl- 2, 4- 6- tri- (4- hydroxyphenyl)- heptan, 1, 3, 5- Tri- (4- hydroxyphenyl)-benzol, 1, 1, 1- Tri- (4- hydroxyphenyl)- ethan, Tri- (4- hydroxyphenyl)- phenylmethan, 2, 2- Bis [4, 4- bis (4- hydroxyphenyl)- cyclohexyl]- propan, 2, 4- Bis (4- hydroxyphenyl- isopropyl)- phenol, Tetra- (4- hydroxyphenyl)- methan, 2, 6-Bis (2- hydroxy- 5- methyl- benzyl)- 4- methyl- phenol, 2- (4- Hydroxyphenyl)- 2- (2, 4- dihydroxyphenyl)- propan, Tetra-(4- [4- hydroxyphenyl- isopropyl]- phenoxy)- methan, 1, 4- Bis [4, 4'- dihydroxytri- phenyl)- methyl]- benzol, in Mengen von 0, 01 bis 1, 0 Mol% bezogen auf eingesetzte Diphenole verwendet werden. Phenolische Verzweigungsmittel können mit den Diphenolen vorgelegt, Säurechlorid- Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen

Gemisch eingesetzt werden.

**Komponente B1**

Bei der Komponente B1 handelt es sich um Pfropfpolymerisate, hergestellt im Emulsionspolymersiationsverfahren, von in bevorzugter Ausführungsform,

B1.1) 5 bis 95 Gew.-%, vorzugsweise 10 bis 70 Gew.-%, besonders bevorzugt 20 bis 60 Gew.-%, bezogen auf die Komponente B1, einer Mischung aus

B1.1.1) 65 bis 85 Gew.- %, bevorzugt 70 bis 80 Gew.- %, bezogen auf B1.1, mindestens eines Monomeren ausgewählt aus der Gruppe der Vinylaromaten (wie beispielsweise Styrol, α- Methylstyrol), kernsubstituierten Vinylaromaten (wie beispielsweise p- Methylstyrol, p- Chlorstyrol) und Methacrylsäure- (C1- C8)- Alkylester (wie beispielsweise Methylmethacrylat, Ethylmethacrylat) und

B1.1.2) 15 bis 35 Gew.- %, bevorzugt 20 bis 30 Gew.- %, bezogen auf B1.1, mindestens eines Monomeren ausgewählt aus der Gruppe der Vinylcyanide (wie beispielsweise ungesättigte Nitrile wie Acrylnitril und Methacrylnitril), (Meth) Acrylsäure- (C1- C8)- Alkylester (wie beispielsweise Methylmethacrylat, n- Butylacrylat, tert.- Butylacrylat) und Derivate (wie beispielsweise Anhydride und Imide) ungesättigter Carbonsäuren (beispielsweise Maleinsäureanhydrid und N- Phenyl- Maleinimid)
auf

B1.2) 95 bis 5 Gew.-%, vorzugsweise 90 bis 30 Gew.-%, besonders bevorzugt 80 bis 40 Gew.-%, bezogen auf die Komponente B1, wenigstens einer elastomeren Pfropfgrundlage.

Die Pfropfgrundlage hat bevorzugt eine Glasübergangstemperatur < 0°C, weiter bevorzugt < -20°C, besonders bevorzugt <-60°C.

Glasübergangstemperaturen werden, soweit in der vorliegenden Erfindung nicht anders angegeben, mittels dynamischer Differenzkalorimetrie (DSC) gemäß der Norm DIN EN 61006 bei einer Heizrate von 10 K/min mit Definition der Tg als Mittelpunkttemperatur (Tangentenmethode) und Stickstoff als Schutzgas bestimmt.

Die Pfropfpartikel in der Komponente B 1 weisen bevorzugt eine mittlere Teilchengröße (D50-Wert) von 0,05 bis 5 μm, vorzugsweise von 0,1 bis 1,0 μm, besonders bevorzugt von 0,2 bis 0,5 μm auf.

Die mittlere Teilchengröße D50 ist der Durchmesser, oberhalb und unterhalb dessen jeweils 50 Gew.- % der Teilchen liegen. Sie wird, soweit in der vorliegenden Anmeldung nicht explizit anders angegeben, mittels Ultrazentrifugenmessung (W. Scholtan, H. Lange, Kolloid, Z. und Z. Polymere 250 (1972), 782-1796) bestimmt.

Bevorzugte Monomere B 1.1.1 sind ausgewählt aus mindestens einem der Monomere Styrol, α-Methylstyrol und Methylmethacrylat, bevorzugte Monomere B 1.1.2 sind ausgewählt aus mindestens einem der Monomere Acrylnitril, Maleinsäureanhydrid und Methylmethacrylat.

Besonders bevorzugte Monomere sind B 1.1.1 Styrol und B 1.1.2 Acrylnitril.

Für die Pfropfpolymerisate B 1 geeignete Pfropfgrundlagen B 1.2 sind beispielsweise Dienkautschuke, Dien-Vinyl- Blockcopolymer- Kautschuke, EP (D) M- Kautschuke, also solche auf Basis s Ethylen/ Propylen und gegebenenfalls Dien, Acrylat-, Polyurethan-, Silikon-, Chloropren- und Ethylen/ Vinylacetat- Kautschuke sowie Mischungen aus solchen Kautschuken bzw. Silikon- Acrylat- Kompositkautschuke, in denen die Silikon- und die Acrylatkomponenten chemisch miteinander (z.B. durch Pfropfung) miteinander verknüpft sind.

Bevorzugte Pfropfgrundlagen B1.2 sind Dienkautschuke (z.B. auf Basis von Butadien oder Isopren), Dien-Vinyl- Blockcopolymer- Kautschuke (z.B. auf Basis von Butadien- und Styrolblöcken), Copolymerisate von Dienkautschuken mit weiteren copolymerisierbaren Monomeren (z.B. gemäß B 1.1.1 und B 1.1.2) und Mischungen aus den zuvor genannten Kautschuktypen. Besonders bevorzugt sind reiner Polybutadienkautschuk und Styrol- Butadien- Blockcopolymerkautschuk.

Der Gelanteil der Pfropfpolymerisate beträgt mindestens 40 Gew.-%, bevorzugt mindestens 60 Gew.- %, besonders bevorzugt mindestens 75 Gew.-% (gemessen in Aceton).

Der Gelgehalt der Pfropfpolymerisate wird, soweit in der vorliegenden Erfindung nicht anders angegeben, bei 25°C als in Aceton als Lösungsmittel unlöslicher Anteil bestimmt (M. Hoffmann, H. Krömer, R. Kuhn, Polymeranalytik I und II, Georg Thieme-Verlag, Stuttgart 1977).

Die Pfropfpolymerisate B 1 werden hergestellt durch radikalische Polymerisation.

Das Pfropfpolymerisat B 1 umfasst herstellungsbedingt im Allgemeinen freies, d.h. nicht chemisch an die Kautschukgrundlage gebundenes Copolymerisat aus B 1.1.1 und B 1.1.2, welches sich dadurch auszeichnet, dass es in geeigneten Lösungsmitteln (z.B. Aceton) gelöst werden kann.

Bevorzugt enthält die Komponente B 1 ein freies Copolymerisat aus B 1.1.1 und B 1.1.2, welches ein gewichtsgemitteltes Molekulargewicht (Mw), bestimmt per Gelpermeationschromatographie mit Polystyrol als Standard, von bevorzugt 30000 bis 150000 g/mol, besonders bevorzugt von 40000 bis 120000 g/mol aufweist.

**Komponente B2**

Als Komponente B2 können die erfindungsgemäßen Zusammensetzungen optional Pfropfpolymerisate, hergestellt im Masse-, Lösungs- oder Suspensionspolymerisationsverfahren enthalten. Hierbei handelt es sich in bevorzugter Ausführungsform um Pfropfpolymerisate von

B2.1) 5 bis 95 Gew.-%, vorzugsweise 80 bis 93 Gew.-%, besonders bevorzugt 85 bis 92 Gew.-%, ganz besonders bevorzugt 87 bis 93 Gew.-%, bezogen auf die Komponente B2, einer Mischung aus

B2.1.1) 65 bis 85 Gew.- %, bevorzugt 70 bis 80 Gew.- %, bezogen auf die Mischung B. 2.1, mindestens eines Monomeren ausgewählt aus der Gruppe der Vinylaromaten (wie beispielsweise Styrol, $\alpha$- Methylstyrol), kernsubstituierten Vinylaromaten (wie beispielsweise p- Methylstyrol, p- Chlorstyrol) und Methacrylsäure- (C1- C8)- Alkylester (wie beispielsweise Methylmethacrylat, Ethylmethacrylat) und

B2.1.2) 15 bis 35 Gew.- %, bevorzugt 20 bis 30 Gew.- % bezogen auf die Mischung B2.1, mindestens eines Monomeren ausgewählt aus der Gruppe der Vinylcyanide (wie beispielsweise ungesättigte Nitrile wie Acrylnitril und Methacrylnitril), (Meth) Acrylsäure- (C1- C8)- Alkylester (wie beispielsweise Methylmethacrylat, n- Butylacrylat, tert.- Butylacrylat) und Derivate (wie beispielsweise Anhydride und Imide) ungesättigter Carbonsäuren (beispielsweise Maleinsäureanhydrid und N- Phenyl- Maleinimid)

auf

B2.2) 95 bis 5 Gew.-%, vorzugsweise 20 bis 7 Gew.-%, besonders bevorzugt 15 bis 8 Gew.-%, ganz besonders bevorzugt 13 bis 7 Gew.-%, bezogen auf die Komponente B2,

wenigstens einer Pfropfgrundlage.

Die Pfropfgrundlage hat vorzugsweise eine Glasübergangstemperatur < 0°C, bevorzugt < -20°C, besonders bevorzugt < -60°C.

Die Pfropfpartikel in der Komponente B2 weisen bevorzugt eine mittlere Teilchengröße (D50-Wert) von 0,1 bis 10 $\mu$m, vorzugsweise von 0,2 bis 2 $\mu$m, besonders bevorzugt von 0,3 bis 1,0 $\mu$m, ganz besonders bevorzugt von 0,3 bis 0,6 $\mu$m auf.

Bevorzugte Monomere B2.1.1 sind ausgewählt aus mindestens einem der Monomere Styrol, $\alpha$-Methylstyrol und Methylmethacrylat, bevorzugte Monomere B2.1.2 sind ausgewählt aus mindestens einem der Monomere Acrylnitril, Maleinsäureanhydrid und Methylmethacrylat.

Besonders bevorzugte Monomere sind B2.1.1 Styrol und B2.1.2 Acrylnitril.

Für die Pfropfpolymerisate B2 geeignete Pfropfgrundlagen B2.2 sind beispielsweise Dienkautschuke, Dien-Vinyl- Blockcopolymer- Kautschuke, EP (D) M- Kautschuke, also solche auf Basis Ethylen/- Propylen und gegebenenfalls Dien, Acrylat-, Polyurethan-, Silikon-, Chloropren- und Ethylen/ Vinylacetat- Kautschuke sowie Mischungen aus solchen Kautschuken bzw. Silikon- Acrylat- Kompositkautschuke, in denen die Silikon- und die Acrylatkomponenten chemisch miteinander (z.B. durch Pfropfung) miteinander verknüpft sind .

Bevorzugte Pfropfgrundlagen B2.2 sind Dienkautschuke (z.B. auf Basis von Butadien oder Isopren), Dien-Vinyl- Blockcopolymer- Kautschuke (z.B. auf Basis von Butadien- und Styrolblöcken), Copolymerisate von Dienkautschuken mit weiteren copolymerisierbaren Monomeren (z.B. gemäß B2.1.1 und B2.1.2) und Mischungen aus den zuvor genannten Kautschuktypen. Besonders bevorzugt als Pfropfgrundlage B2.2 sind Styrol- Butadien- Blockcopolymerkautschuke und Mischungen von Styrol- Butadien- Blockcopolymerkautschuken mit reinem Polybutadienkautschuk.

Der Gelanteil der Pfropfpolymerisate B2 beträgt vorzugsweise 10 bis 35 Gew.-%, besonders bevorzugt 15 bis 30 Gew.-%, ganz besonders bevorzugt 17 bis 23 Gew.-% (gemessen in Aceton).

Besonders bevorzugte Polymerisate B2 sind z.B. ABS-Polymerisate hergestellt durch radikalische Polymerisation, welche in bevorzugter Ausführungsform bis zu 10 Gew.-%, besonders bevorzugt bis zu 5 Gew.-%, besonders bevorzugt 2 bis 5 Gew.-%, jeweils bezogen auf das Pfropfpolymerisat B2, an n-Butylacrylat enthalten.

Das Pfropfpolymerisat B2 umfasst im Allgemeinen herstellungsbedingt freies, d.h. nicht chemisch an die Kautschukgrundlage gebundenes Copolymerisat aus B2.1.1 und B2.1.2, welches sich dadurch auszeichnet, dass es in geeigneten Lösungsmittel (z.B. Aceton) gelöst werden kann.

Bevorzugt enthält die Komponente B2 freies Copolymerisat aus B2.1.1 und B2.1.2, welches ein gewichtsgemitteltes Molekulargewicht (Mw), bestimmt per Gelpermeationschromatographie mit Polystyrol als Standard, von bevorzugt 50000 bis 200000 g/mol, besonders bevorzugt von 70000 bis 150000 g/mol, besonders bevorzugt von 80000 bis 120000 g/mol aufweist.

**Komponente B3**

Die Zusammensetzung kann als weitere Komponente B3 optional (Co) Polymerisate von mindestens einem Monomeren aus der Gruppe der Vinylaromaten, Vinylcyanide (ungesättigte Nitrile), (Meth)- Acrylsäure- (C1 bis C8)-Alkylester, ungesättigte Carbonsäuren sowie Derivate (wie Anhydride und Imide) ungesättigter Carbonsäuren enthalten.

Insbesondere geeignet sind als Komponente B3 (Co)Polymerisate aus

B3.1 50 bis 99 Gew.- %, bevorzugt 65 bis 85 Gew.- %, besonders bevorzugt 70 bis 80 Gew.- % bezogen auf das (Co) Polymerisat B3 mindestens eines Monomeren ausgewählt aus der Gruppe der Vinylaromaten (wie beispielsweise Styrol, $\alpha$- Methylstyrol), kernsubstituierten Vinylaromaten (wie beispielsweise p- Methylstyrol, p- Chlorstyrol) und (Meth) Acrylsäure- (C1- C8)- Alkylester (wie beispielsweise Methylmethacrylat, n- Butylacrylat, tert.- Butylacrylat) und

B3.2 1 bis 50 Gew.- %, bevorzugt 15 bis 35 Gew.- %, besonders bevorzugt 20 bis 30 Gew.- % bezogen auf das (Co) Polymerisat B3 mindestens eines Monomeren ausgewählt aus der Gruppe der Vinylcyanide (wie beispielsweise ungesättigte Nitrile wie Acrylnitril und Methacrylnitril), (Meth) Acrylsäure- (C1- C8)- Alkylester (wie beispielsweise Methylmethacrylat, n- Butylacrylat, tert.- Butylacrylat), ungesättigte Carbonsäuren und Derivate ungesättigter Carbonsäuren (beispielsweise Maleinsäureanhydrid und N- Phenyl- Maleinimid) .

Diese (Co)Polymerisate B3 sind harzartig, thermoplastisch und kautschukfrei. Besonders bevorzugt ist das Copolymerisat aus B3.1 Styrol und B3.2 Acrylnitril.

Derartige (Co)Polymerisate B3 sind bekannt und lassen sich durch radikalische Polymerisation, insbesondere durch Emulsions-, Suspensions-, Lösungs- oder Massepolymerisation herstellen.

Die (Co)Polymerisate B3 besitzen ein gewichtsgemitteltes Molekulargewicht (Mw), bestimmt per Gelpermeationschromatographie mit Polystyrol als Standard, von bevorzugt 50000 bis 200000 g/mol, besonders bevorzugt von 70000 bis 150000 g/mol, besonders bevorzugt von 80000 bis 130000 g/mol.

**Komponente C**

Die Zusammensetzung kann als Komponente C optional weiterhin handelsübliche Polymeradditive enthalten.

Als handelsübliche Polymeradditive gemäß Komponente C kommen Additive wie beispielsweise Flammschutzmittel (beispielsweise Phosphor- oder Halogenverbindungen), Flammschutzsynergisten (beispielsweise nanoskalige Metalloxide), rauchhemmende Additive (beispielsweise Borsäure oder Borate), Antidrippingmittel (beispielsweise Verbindungen der Substanzklassen der fluorierten Polyolefine, der Silikone sowie Aramidfasern), interne und externe Gleit- und Entformungsmittel (beispielsweise Pentaerythrittetrastearat, Montanwachs oder Polyethylenwax), Fließfähigkeitshilfsmittel (beispielsweise niedermolekulare Vinyl (co) polymerisate), Antistatika (beispielsweise Blockcopolymere aus Ethylenoxid und Propylenoxid, andere Polyether oder Polyhydroxyether, Poletheramide, Polyesteramide oder Sulfonsäuresalze), Leitfähigkeitsadditive (beispielsweise Leitruß oder Carbon Nanotubes), Stabilisatoren (beispielsweise UV/Licht- Stabilisatoren, Thermostabilisatoren, Antioxidantien, Umesterungsinhibitoren, Hydrolyseschutzmittel), antibakteriell wirkende Additive (beispielsweise Silber oder Silbersalze), kratzfestigkeitsverbessernde Additive (beispielsweise Silikonöle oder harte Füllstoffe wie Keramik (hohl) kugeln oder Quarzpulver), IR- Absorbentien, optische Aufheller, fluoreszierende Additive, Füll- und Verstärkungsstoffe (z.B. Talk, gemahlene Glas- oder Karbonfasern, Glas- oder Keramik (hohl) kugeln, Glimmer, Kaolin, $CaCO_3$ und Glasschuppen), Säuren sowie Farbstoffe und Pigmente (beispielsweise Ruß, Titandioxid oder Eisenoxid), oder aber Mischungen mehrerer der genannten Additive in Frage.

In bevorzugter Ausführungsform enthalten die erfindungsgemäßen Zusammensetzungen als Komponente C mindestens je eine Komponente ausgewählt aus der Gruppe der Entformungsmittel und Stabilisatoren. In besonders bevorzugter Ausführungsform kommt als Entformungsmittel Pentaerythrittetrastearat zum Einsatz. In besonders bevorzugter Ausführungsform kommt als Stabilisator mindestens eine Verbindung ausgewählt aus der Gruppe der sterisch gehinderten Phenole, der organischen Phosphite und der Brönstedt-sauren Verbindungen zum Einsatz.

Als Komponente C können die erfindungsgemäßen Zusammensetzungen insbesondere auch Flammschutzmittel, beispielsweise halogenierte organische Verbindungen bzw. phosphorhaltige Flammschutzmittel enthalten. Letztgenannte kommen bevorzugt zum Einsatz.

Phosphorhaltige Flammschutzmittel im erfindungsgemäßen Sinne sind bevorzugt ausgewählt aus den Gruppen der mono- und oligomeren Phosphor- und Phosphonsäureester, Phosphonatamine und Phosphazene, wobei auch

Mischungen von mehreren Verbindungen ausgewählt aus einer oder verschiedenen dieser Gruppen als Flammschutzmittel zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden.

Bevorzugte mono- und oligomere Phosphor- bzw. Phosphonsäureester sind Phosphorverbindungen der allgemeinen Formel (IV)

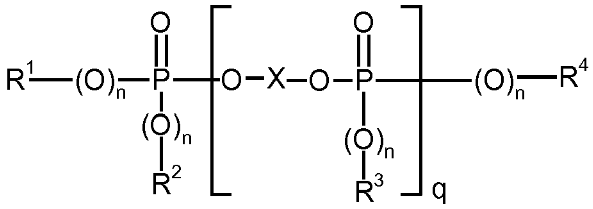

(IV)

worin

| | |
|---|---|
| R1, R2, R3 und R4, | unabhängig voneinander jeweils gegebenenfalls halogeniertes C1 bis C8-Alkyl, jeweils gegebenenfalls durch Alkyl, vorzugsweise C1 bis C4-Alkyl, und/oder Halogen, vorzugsweise Chlor, Brom, substituiertes C5 bis C6-Cycloalkyl, C6 bis C20-Aryl oder C7 bis C12-Aralkyl, |
| n | unabhängig voneinander, 0 oder 1 |
| q | 0 bis 30 und |
| X | einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten. |

Bevorzugt stehen R1, R2, R3 und R4 unabhängig voneinander für C1 bis C4- Alkyl, Phenyl, Naphthyl oder Phenyl- C1- C4- alkyl. Die aromatischen Gruppen R1, R2, R3 und R4 können ihrerseits mit Halogen- und/ oder Alkylgruppen, vorzugsweise Chlor, Brom und/ oder C1 bis C4- Alkyl substituiert sein. Besonders bevorzugte Aryl- Reste sind Kresyl, Phenyl, Xylenyl, Propylphenyl oder Butylphenyl sowie die entsprechenden bromierten und chlorierten Derivate davon.

X in der Formel (IV) bedeutet bevorzugt einen ein- oder mehrkernigen aromatischen Rest mit 6 bis 30 C-Atomen. Dieser leitet sich bevorzugt von Diphenolen der Formel (I) ab.

n in der Formel (IV) kann, unabhängig voneinander, 0 oder 1 sein, vorzugsweise ist n gleich 1.

q steht für Werte von 0 bis 30. Bei Einsatz von Mischungen verschiedener Komponenten der Formel (IV) können Mischungen vorzugsweise zahlengemittelte q-Werte von 0,3 bis 10, besonders bevorzugt 0,5 bis 10, insbesondere 1,05 bis 1,4 verwendet werden.

X steht besonders bevorzugt für

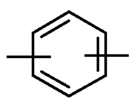 , 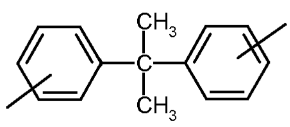 , 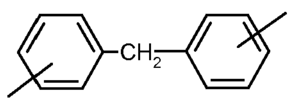 ,

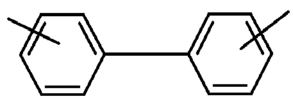

oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Der Einsatz von oligomeren Phosphorsäureestern der Formel (IV), die sich vom Bisphenol A ableiten, ist besonders vorteilhaft, da die mit dieser Phosphorverbindung ausgerüsteten Zusammensetzungen eine besonders hohe Spannungsriss- und Hydrolysebeständigkeit sowie eine besonders geringe Neigung zur Belagsbildung bei der Spritzgussverarbeitung aufweisen. Des Weiteren lässt sich mit diesen Flammschutzmitteln eine besonders hohe Wärmeformbeständigkeit erzielen.

Als erfindungsgemäße Komponente C können Monophosphate (q=O), Oligophosphate (q=1-30) oder Mischungen aus Mono- und Oligophosphaten eingesetzt werden.

Monophosphorverbindungen der Formel (IV) sind insbesondere Tributylphosphat, Tris- (2- chlorethyl)- phosphat, Tris- (2, 3- dibromprobyl)- phosphat, Triphenylphosphat, Trikresylphosphat, Diphenylkresylphosphat, Diphenyloctylphosphat, Diphenyl- 2- ethylkresylphosphat, Tri- (isopropylphenyl)- phosphat, halogensubstituierte Arylphosphate, Methylphosphonsäuredimethylester, Methylphosphensäurediphenylester, Phenylphosphonsäurediethylester, Triphenylphosphinoxid oder Trikresylphosphinoxid.

Die Phosphorverbindungen gemäß Formel (IV) sind bekannt (vgl. z.B. EP-A 363 608, EP-A 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Die mittleren q-Werte können bestimmt werden, indem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für q berechnet werden.

Phosphonatamine sind vorzugsweise Verbindungen der Formel (V)

A3- y- NB1y (V)

in welcher

A für einen Rest der Formel (Va)

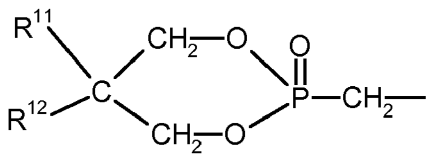

(Va)

oder (Vb)

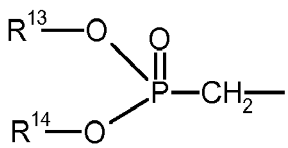

(Vb)

steht,

R11 und R12 unabhängig voneinander für unsubstituiertes oder substituiertes C1-C10-Alkyl oder für unsubstituiertes oder substituiertes C6 bis C10-Aryl, stehen,

R13 und R14 unabhängig voneinander für unsubstituiertes oder substituiertes C1 bis C10-Alkyl oder unsubstituiertes oder substituiertes C6 bis C10-Aryl stehen oder

R13 und R14 zusammen für unsubstituiertes oder substituiertes C3 bis C10-Alkylen stehen,

y die Zahlenwerte 0, 1 oder 2 bedeuten und

B1 unabhängig für Wasserstoff, gegebenenfalls halogeniertes C2 bis C8-Alkyl, unsubstituiertes oder substituiertes C6 bis C10-Aryl steht.

B1 steht vorzugsweise unabhängig für Wasserstoff, für Ethyl, n- oder iso-Propyl, welche durch Halogen substituiert sein können, unsubstituiertes oder durch C1 bis C4-Alkyl und/oder Halogen substituiertes C6 bis C10-Aryl, insbesondere Phenyl oder Naphthyl.

Alkyl in R11, R12, R13 und R14 steht unabhängig vorzugsweise für Methyl, Ethyl, n-Propyl, iso-Propyl, n-, iso-, sek. oder tert.-Butyl, Pentyl oder Hexyl.

Substituiertes Alkyl in R11, R12, R13 und R14 steht unabhängig vorzugsweise für durch Halogen substituiertes C1 bis C10-Alkyl, insbesondere für ein- oder zweifach substituiertes Methyl, Ethyl, n-Propyl, iso-Propyl, n-, iso-, sek. oder tert.-Butyl, Pentyl oder Hexyl.

C6 bis C10-Aryl steht in R11, R12, R13 und R14 unabhängig vorzugsweise für Phenyl, Naphthyl oder Binaphthyl, insbesondere o-Phenyl, o-Naphthyl, o-Binaphthyl, welche durch Halogen (im allgemeinen ein-, zwei- oder dreifach) substituiert sein können.

R13 und R14 können zusammen mit den Sauerstoffatomen, an die sie direkt gebunden sind, und dem Phosphoratom eine Ringstruktur bilden.

Beispielhaft und vorzugsweise werden genannt: 5, 5, 5‘, 5‘, 5", 5"- Hexamethyltris (1, 3, 2- dioxaphosphorinan-methan) amino- 2, 2’, 2"- trioxid der Formel (Va- 1)

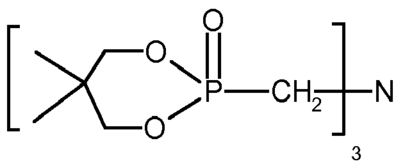

(Va-1)

1, 3, 2- Dioxaphosphorinan- 2- methanamin, N- butyl- N[(5, 5- dimethyl- 1, 3, 2- dioxaphosphorinan- 2- yl) methyl]- 5, 5- dimethyl-, P, 2- dioxide; 1, 3, 2- Dioxaphosphorinane- 2- methanamin, N- [[5"5- dimethyl- 1, 3, 2- dioxaphosphorinan- 2- yl) methyl]- 5, 5- dimethyl- N- phenyl-, P, 2- dioxid; 1, 3, 2- Dioxaphosphorinan- 2- methanamin, N, N-dibutyl- 5, 5- dimethyl-, 2- oxid, 1, 3, 2- Dioxaphosphorinan- 2- methanimin, N- [(5, 5- dimethyl- 1, 3, 2- dioxaphosphorinan-2- yl) methyl]- N- ethyl- 5, 5- dimethyl-, P, 2- dioxid, 1, 3, 2- Dioxaphosphorinan- 2- methanamin, N- butyl- N- [(5, 5-dichloromethyl- 1, 3, 2- dioxaphosphorinan- 2- yl)- methyl]- 5, 5- di- chloromethyl-, P, 2- dioxid, 1, 3, 2- Dioxaphosphorinan-2- methanamin, N- [(5, 5- di- chloromethyl- 1, 3, 2- dioxoaphosphorinan- 2- yl) methyl]- 5, 5- di- chloromethyl- N- phenyl-, P, 2- dioxid; 1, 3, 2- Dioxaphosphorinan- 2- methanamin, N, N- di- (4- chlorobutyl)- 5, 5- dimethyl- 2- oxide; 1, 3, 2-Dioxaphosphorinan- 2- methanimin, N- [(5, 5- dimethyl- 1, 3, 2- dioxaphosphorinan- 2- yl) methan]- N- (2- chloroethyl)-5, 5- di (chloromethyl) -, P2- dioxid.

Bevorzugt sind weiterhin:

Verbindungen der Formel (Va-2) oder (Va-3)

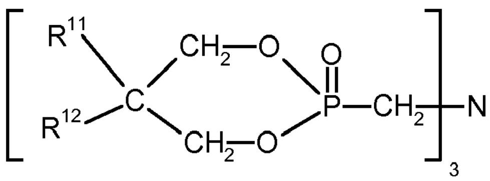

(Va-2)

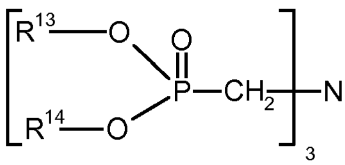

(Va-3)

wobei
R11, R12, R13 und R14 die oben angegebenen Bedeutungen haben.

Besonders bevorzugt sind Verbindungen der Formel (Va-2) und (Va-1). Die Herstellung der Phosphonatamine ist beispielsweise in US-PS 5 844 028 beschrieben.

Phosphazene sind Verbindungen der Formeln (VIa) und (VIb)

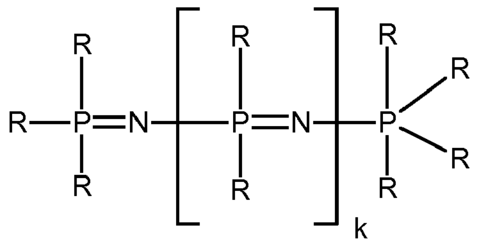

(VIa),

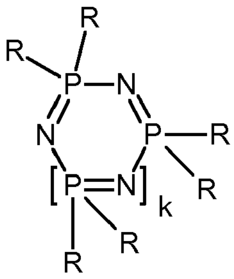

(VIb),

worin

R jeweils gleich oder verschieden ist und für Amino, jeweils gegebenenfalls halogeniertes, vorzugsweise mit Fluor halogeniertes C1 bis C8- Alkyl, oder C1 bis C8- Alkoxy, jeweils gegebenenfalls durch Alkyl, vorzugsweise C1 bis C4- Alkyl, und/ oder Halogen, vorzugsweise Chlor und/ oder Brom, substituiertes C5 bis C6- Cycloalkyl, C6 bis C20- Aryl, vorzugsweise Phenyl oder Naphthyl, C6 bis C20- Aryloxy, vorzugsweise Phenoxy, Naphthyloxy, oder C7 bis C12- Aralkyl, vorzugsweise Phenyl- C1- C4- alkyl, steht,

k für 0 oder eine Zahl von 1 bis 15, vorzugsweise für eine Zahl von 1 bis 10 steht.

Beispielhaft seien Propoxyphosphazen, Phenoxyphosphazen, Methylphenoxyphosphazen, Aminophosphazen und Fluoralkylphosphazene genannt. Bevorzugt ist Phenoxyphosphazen.

Die Phosphazene können allein oder als Mischung eingesetzt werden. Der Rest R kann immer gleich sein oder 2 oder mehre Reste in den Formeln (VIa) und (VIb) können verschieden sein. Phosphazene und deren Herstellung sind beispielsweise in EP-A 728 811, DE-A 1 961668 und WO 97/40092 beschrieben.

Die Flammschutzmittel können allein oder in beliebiger Mischung untereinander oder in Mischung mit anderen Flammschutzmitteln eingesetzt werden.

Darüber hinaus enthalten flammgeschütze Zusammensetzungen in bevorzugter Ausführungsform die zuvorgenannten Flammschutzmittel in Kombination mit mindestens einem Antidrippingmittel ausgewählt aus den Substanzklassen der fluorierten Polyolefine, der Silikone sowie Aramidfasern. Besonders bevorzugt kommen Polytetrafluorethylen-Polymere als Antidrippingmittel zum Einsatz.

Die nach dem erfindungsgemäßen Verfahren hergestellten Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen sowie Karrosserie- bzw. Innenbauteile für Nutzfahrzeuge, insbesondere für den Automobilbereich.

Insbesondere können die nach dem erfindungsgemäßen Verfahren hergestellten Formmassen beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

Die nach dem erfindungsgemäßen Verfahren hergestellten Formmassen eignen sich besonders auch zur Herstellung von Formkörpern oder Formteilen mit Class- A- Oberflächen- Anforderung und Hochglanz- Finish, welche gegebenenfalls partiell oder vollständig einem weiteren Oberflächenbehandlungsschritt durch beispielsweise Lackierung, Folienhinterspritzung, Metallisierung durch Vakuumbedampfung oder Galvanisierung unterzogen wurden.

Unter "hochglänzend" verstanden wird im Sinne der vorliegenden Erfindung ein Glanzgrad ermittelt in Reflexion gemäß DIN 67530 bei einem Messwinkel von 60° von mindestens 95, bevorzugt von mindestens 97, besonders bevorzugt von mindestens 99. Gegenstand der Erfindung sind somit auch Formkörper oder Formteile aus den erfindungsgemäßen Zusammensetzungen mit vollständigem oder partiellen Hochglanz-Finish, welche gegebenenfalls partiell oder vollständig einem weiteren Oberflächenbehandlungsschritt durch beispielsweise Lackierung, Folienhinterspritzung, Metallisierung durch Vakuumbedampfung oder Galvanisierung unterzogen wurden.

Gegenstand der Erfindung sind somit auch Formkörper oder Formteile aus den Zusammensetzungen hergestellt nach dem erfindungsgemäßen Verfahren mit vollständigem oder partiellen Hochglanz-Finish, welche gegebenenfalls partiell oder vollständig einem weiteren Oberflächenbehandlungsschritt durch beispielsweise Lackierung, Folienhinterspritzung, Metallisierung durch Vakuumbedampfung oder Galvanisierung unterzogen wurden.

**Beispiele**

**Komponente A1**

Lineares Polycarbonat auf Basis Bisphenol-A mit einem gewichtsgemittelten Molekulargewicht $M_w$ von 28 kg/mol (bestimmt durch GPC in Methylenchlorid bei 25°C mit Polycarbonat als Standard).

**Komponente B1**

Präcompound, vorliegend als Granulat, aus 50 Gew.- % eines Pfropfpolymerisats vom ABS- Typ, hergestellt im Emulsionspolymersiationsverfahren, mit einem A: B: S- Verhältnis von 12: 50: 38 Gew.- % und 50 Gew.- % eines Styrol- Acrylnitril- Copolymerisats, hergestellt im Massepolymersiationsverfahren, mit einem Styrol- Acrylnitril- Verhältnis von 76: 24 Gew.- % und mit einem per GPC mit Polystyrol als Standard in Dimethylformamid bei 20°C gemessenen gewichtsgemittelten Molekulargewicht $M_w$ von 100 kg/mol. Die Komponente B 1 enthält herstellungsbedingt 900 mg/kg des in der Koagulation des Pfropfpolymerisats eingesetzten Fällmittels Magnesiumsulfat. Dieses Magnesiumsulfat liegt gemäß Nachweis durch Rasterelektronenmikroskopie (REM) gekoppelt mit energiedispersiver Röntgenspektroskopie (EDX) in kristallinen Domänen mit einer Dimension von zum Teil bis über 100 $\mu$m vor.

Die Bestimmung des Magnesiumsulfatgehaltes in Komponente B1 erfolgte über eine quantitative Bestimmung des Sulfationengehaltes und dessen Umrechnung auf Magnesiumsulfat, da eine Ermittlung aus dem Magnesiumgehalt aufgrund fehlender Selektivität auf $MgSO_4$ nicht möglich ist. Hierzu wurde ca. 1 g der Komponente B1 genau eingewogen, mit 25 ml Aceton, p.A. versetzt und das Gemisch für 30 Minuten im Ultraschallbad behandelt. Die entstandene Suspension wurde mit Milliporewasser auf 200 ml aufgefüllt und durchgeschüttelt. Die so behandelte Suspension wurde membranfiltriert. Die Bestimmung des Sulfationen-Gehaltes erfolgte im Filtrat ionenchromatographisch unter Verwendung eines Ionenchromatographen DIONEX DX 600 (Fa. DIONEX) (Trennsäule: IonPac AS 11, 4x250mm (Fa.DIONEX); mobile Phase: Gradient NaOH, c= 0,004/0,076 mol/L; Flußrate: 1,8 ml/min; Autosamplertemperatur: 23°C; Säulentemperatur: 35°C; Suppression: elektrochemisch, ASRS 300, 4mm; Detektion: Leitfähigkeit).

**Komponente B2**

n- Butylacrylat- modifiziertes Pfropfpolymerisat vom ABS- Typ, hergestellt im Massepolymersiationsverfahren, mit einem A: B: S- Verhältnis von 21: 10: 65 Gew.- % und mit einem n- Butylacrylatgehalt von 4 Gew.- %. Der D50-Wert der Pfropfpartikeldurchmesser bestimmt durch Ultrazentrifugation beträgt 0, 5 $\mu$m. Die dem Pfropfpolymersiat zugrunde liegende Pfropfgrundlage ist ein Styrol- Butadien- Blockcopolymer- Kautschuk (SBR) . Der Gelgehalt des Pfropfpolymerisats gemessen in Aceton liegt bei 20 Gew.- %. Das per GPC mit Polystyrol als Standard in Dimethylformamid bei 20°C gemessene gewichtsgemittelte Molekulargewicht $M_w$ des freien, d.h. nicht chemisch an den Kautschuk gebundenen bzw. in den Kautschukpartikeln in für Aceton unlöslicher Form inkludierten n- Butylacrylat- modifizierten SANs beträgt 110 kg/mol.

**Komponente B3**

Styrol- Acrylnitril- Copolymerisat, hergestellt im Massepolymersiationsverfahren, mit einem Styrol- Acrylnitril-Verhältnis von 76: 24 Gew.- % und mit einem per GPC mit Polystyrol als Standard in Dimethylformamid bei 20°C gemessenen gewichtsgemittelten Molekulargewicht $M_w$ von 100 kg/mol.

**Komponente C1**

Pentaerythrittetrastearat als Gleit-/Entformungsmittel

**Komponente C2**

Phosphorigsäureester des Bis- (2- hydroxy- 3- cyclohexyl- 5- methyl- phenyl)- methans mit der Formel

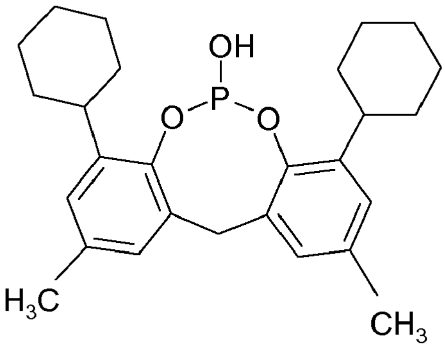

.

**Komponente C3**

Thermostabilisator, Irganox 1076, BASF (Ludwigshafen, Deutschland)
Die Zusammensetzungen der in Tabelle 1 aufgeführten Beispiele und Vergleichsbeispiele enthalten alle
60,35 Gew.-Teile der Komponente A1
23,16 Gew.-Teile der Komponente B 1
8,90 Gew.-Teile der Komponente B2
6,53 Gew.-Teile der Komponente B3
0,74 Gew.-Teile der Komponente C1
0,12 Gew.-Teile der Komponente C2
0,20 Gew.-Teile der Komponente C3
und unterscheiden sich ausschließlich im zur Herstellung verwendeten Verfahren.

**<u>Herstellung der Prüfkörper und Prüfung</u>**

Die Herstellung der Zusammensetzungen erfolgte auf einem Zweiwellenextruder Evolum® 32 HT der Fa. Clextral (Frankreich) mit Verhältnis Länge zu Durchmesser L/D=36 bei einer Massetemperatur von 280 bis 290°C und unter Anlegen eines Unterdrucks von 100-200 mbar (absolut).
Die Komponente B1 wurde zum einen unbehandelt eingesetzt (V1), zum anderen zuvor für unterschiedliche Zeiten und bei unterschiedlichen Temperaturen in Kontakt mit flüssigem Wasser (V2 und Beispiele 1, 2 und 7) gesetzt oder aber alternativ einer Luftatmosphäre mit unterschiedlicher relativer Luftfeuchtigkeit ausgesetzt (V3, V5 und V6 sowie Beispiele 3-6 und 8). Die Details sind den Tabellen 1 und 2 zu entnehmen. Dabei wurde in den Fällen, in denen die Komponente B 1 in Kontakt mit flüssigem Wasser gesetzt wurde, das Granulat nach der Behandlung abgesiebt und dann oberflächenbenetzt im finalen Compoundierungsschritt eingesetzt. In den Fällen, in denen die Komponente B 1 in Kontakt mit einer Luftatmosphäre mit unterschiedlicher relativer Luftfeuchtigkeit gesetzt wurde, war das so behandelte Produkt oberflächentrocken und wurde auch so im finalen Compoundierungsschritt eingesetzt.
Im Beispiel 7 wurde der Präcompound B1 bei seiner Herstellung zur Verfestigung durch ein Wasserbad gezogen und danach nicht wie üblich vollständig durch Abblasen mit Luft getrocknet, sondern im oberflächenfeuchten (mit Wasser benetzten) Zustand belassen und so in einem Silo für 3 Tage bei 20°C vor dem Einsatz im finalen Compoundierungsschritt gelagert.
Die Wasseraufnahme der Komponente B 1 bei diesen Verfahren wurde gravimetrisch bestimmt und liegt bei den erfindungsgemäßen Beispielen bei 0,2 bis 1,1 Gew.-%, bezogen auf die Komponente B1.
Im Vergleichsbeispiel V4 wurde gemäß dem in EP 2 398 842 Albeschriebenen Verfahren eine Teilmenge des Präcompounds B1 von 6 Gew.-Teilen, bezogen auf die Summe von A bis C, durch eine Mischung aus 50 Gew.-% des

bei der Herstellung des Präcompounds B1 zum Einsatz kommenden pulverförmigen Emulsions-ABS-Pfropfpolymerisats und 50 Gew.-% des bei der Herstellung des Präcompounds B1 zu Einsatz kommenden Styrol-Acrylnitril-Copolymersiats substituiert, das pulverförmige Emulsions-ABS-Pfropfpolymerisats mit 10 Gew.-Teilen, bezogen auf die Summe aus dem pulverförmigen Emulsions-ABS-Pfropfpolymerisats und Wasser, an flüssigem Wasser beaufschlagt, dieses befeuchtete pulverförmige Emulsions-ABS-Pfropfpolymerisat mit den ebenfalls pulverförmigen Komponenten C1 bis C3 zu einer Pulvermischung abgemischt und diese im finalen Compoundierungsschritt mit den restlichen Komponenten der Zusammensetzung versetzt.

Die aus der jeweiligen Compoundierung resultierenden Granulate wurden auf einer Spritzgussmaschine (Fa. Arburg) bei Schmelzetemperaturen von 260°C und einer Werkzeugtemperatur von 80°C zu Platten der Abmessung 150 mm x 105 mm x 2 mm verarbeitet. Hierbei kam ein hochglanzpoliertes Werkzeug zum Einsatz.

Diese Platten wurden für 3 Tage bei 40°C einer Luftatmosphäre mit einer relativen Luftfeuchtigkeit von 95% ausgesetzt.

Danach erfolgte eine visuelle Begutachtung durch 3 unabhängige Gutachter gemäß folgender Bewertungsgrundlage:

++ keinerlei Blasen oder nur vereinzelte sehr kleine Blasen

\+ einige sehr kleine, noch nicht störende Blasen

\- viele sehr kleine Blasen und/oder nur vereinzelte größere Blasen

-- viele größere Blasen

Darüber hinaus erfolgte eine quantitative Auswertung der Defekte nach Anzahl, Art und Größe mittels Lichtmikroskopie mit der Differential- Interferenz- Kontrast (DIC)- Methode und digitaler Bilderfassung unter Verwendung eines Zeiss Axioplan- Mikroskops mit einer bei 100- fachen Vergrößerung im Auflicht- Modus. Dabei wurde jeweils die Hälfte der Plattenoberfläche einseitig auf Blasen untersucht. Als Blase wurde dabei eine Störung der Oberfläche definiert, die eine ausschließlich positive Topographie- Änderung darstellt, d.h. ein Erhöhung über das normale Oberflächenniveau ohne jegliche damit auftretende Vertiefungen im Oberflächenprofil. Die Auswertung erfolgte aus den ermittelten Einzeldurchmessern d der einzelnen Blasen- Defekte durch Bestimmung des maximalen Blasendurchmessers $d_{max}$ sowie der relativen Defektfläche $A_{rel}$ bezogen auf die untersuchte Oberflächengröße gemäß der Formel

$$A_{rel} = \Sigma\,(\pi d^2/4)\,/\,(0{,}5 \cdot 150\text{ mm} \cdot 105\text{ mm}),$$

wobei $\Sigma$ für die Summe über alle Defekte mit Blasen- Topographie steht.

Die Beispiele und Vergleichsbeispiele sind in den Tabellen 1 und 2 zusammengefasst. Die Daten zeigen, dass nur diejenigen nach dem erfindungsgemäßen Verfahren hergestellten Formmassen die verbesserten Oberflächeneigenschaften nach Wärme-Feucht-Lagerung gemäß der Aufgabe dieser Erfindung aufweisen und sich insofern zur Herstellung von Formkörpern mit alterungsstabil visuell Defekt-freier Class A-Oberfläche eignen.

*Tabelle 1:* Beispiele

| **Verfahren** | **V1** | **V2** | **1** | **2** | **V3** | **3** | **4** | **5** | **6** | **V4** | **7** |
|---|---|---|---|---|---|---|---|---|---|---|---|
| Kontakt von B 1 mit flüssigem Wasser | | x | x | x | | | | | | | x |
| Kontakt von B 1 mit feuchter Luft | | | | | x | x | x | x | x | | |
| Wasserzugabe zum ABS-Pulver | | | | | | | | | | x | |
| Temperatur bei der Behandlung [°C] | | 40 | 40 | 40 | 85 | 85 | 85 | 40 | 40 | | 20 |
| rel. Luftfeuchte der Luft [%] | | | | | 95 | 95 | 95 | 95 | 95 | | |

(fortgesetzt)

| Verfahren | V1 | V2 | 1 | 2 | V3 | 3 | 4 | 5 | 6 | V4 | 7 |
|---|---|---|---|---|---|---|---|---|---|---|---|
| Dauer der Behandlung [h] | | 3 | 24 | 72 | 3 | 24 | 72 | 24 | 72 | | 72 |
| **Eigenschaften** | | | | | | | | | | | |
| visuelle Bewertung | -- | -- | + | +/++ | -- | ++ | ++ | + | ++ | -- | +/++ |

Tabelle 2: Beispiele

| Verfahren | V1 | 2 | 8 | V4 | V5 | V6 |
|---|---|---|---|---|---|---|
| Kontakt von B 1 mit flüssigem Wasser | | x | | | | |
| Kontakt von B 1 mit feuchter Luft | | | x | | x | x |
| Wasserzugabe zum ABS-Pulver | | | | x | | |
| Temperatur bei der Behandlung [°C] | | 40 | 95 | | 40 | 95 |
| rel. Luftfeuchte der Luft [%] | | | 100 | | 100 | 100 |
| Dauer der Behandlung [h] | | 72 | 72 | | 4 | 4 |
| **Eigenschaften** | | | | | | |
| visuelle Bewertung | -- | +/++ | ++ | -- | -- | -- |
| mikroskopische Auswertung<br>max. Blasendurchmesser $d_{max}$ [$\mu$m]<br>relativer Defektflächenanteil $A_{rel}$ [Flächen-ppm] | <br>383<br>87 | <br>225<br>6 | <br>276<br>16 | <br>332<br>83 | <br>287<br>139 | <br>452<br>88 |

## Patentansprüche

**1.** Verfahren, zur Herstellung von Zusammensetzungen enthaltend

A) 0 bis 98 Gew.-Teile, bezogen auf die Summe aus A und B, eines oder eine Mischung mehrerer thermoplastischer Polymere verschieden von B und
B) 2 bis 100 Gew.-Teile, bezogen auf die Summe aus A und B, aus

B1) mindestens einem im Emulsionspolymersiationsverfahren hergestellten Pfropfpolymerisat,
B2) optional mindestens einem im Masse-, Suspensions- oder Lösungspolymeriationsverfahren hergestellten Pfropfpolymerisat,
B3) optional mindestens einem kautschukfreien Vinyl (co) polymerisat, und

C) 0 bis 30 Gew.-Teile, bezogen auf die Summe aus A und B, mindestens eines handelsüblichen Polymeradditivs,
wobei sich die Summe der Gewichtsteile A und B zu 100 addiert,
**dadurch gekennzeichnet, dass**

(i) die Komponente B mindestens ein anorganisches Salz, bestehend aus einem Kation ausgewählt aus der Gruppe der Alkalimetalle, Erdalkalimetalle und Aluminium und einem Anion ausgewählt aus der Gruppe bestehend aus Chlorid, Sulfat, Nitrat, Phosphat, Acetat und Formiat, in einer Konzentration von 100 bis 5000 mg/kg, bezogen auf die Gesamtzusammensetzung, enthält und

a) in einem ersten Verfahrensschritt die gesamte(n) das Salz enthaltende(n) Komponente(n) vollständig durch Kontakt mit flüssigem Wasser oder mit einer Wasserdampf enthaltenden Atmosphäre mit Wasser beaufschlagt wird,
b) in einem zweiten Verfahrensschritt die so mit Wasser beaufschlagte(n) Komponente(n) aufgeschmolzen und im aufgeschmolzenen Zustand geknetet werden, und
c) optional in einem dritten Verfahrensschritt die so präparierte Komponente mit den restlichen Komponenten der Zusammensetzung gemischt, die Mischung erneut aufgeschmolzen, geknetet und die Komponenten der Mischung dadurch ineinander dispergiert werden,
wobei mindestens in einem der Schritte b) oder c) ein Unterdruck von mindestens 200 mbar angelegt wird und dadurch das im Verfahrensschritt a) in das Verfahren eingebrachte Wasser wieder aus dem Produkt entfernt wird.

**2.** Verfahren nach Anspruch 1, **dadurch gekennzeichnet, daß** die Expositionzeit der das Salz enthaltende(n) Komponente(n) B in Schritt a) mit Wasser oder Wasserdampf mindestens 10 h und nicht länger als 500 h ist.

**3.** Verfahren nach einem der vorhergehenden Ansprüche, **dadurch gekennzeichnet, daß** die das Salz enthaltende (n) Komponente(n) B als Granulat vorliegen.

**4.** Verfahren nach einem der vorhergehenden Ansprüche, **dadurch gekennzeichnet, daß** in Schritt a) die gesamten das Salz enthaltende(n) Komponente(n) mit einer Wasserdampf enthaltenden Atmosphäre mit einer relativen Luftfeuchtigkeit von mindestens 70 % mit Wasser beaufschlagt wird/werden.

**5.** Verfahren nach einem der vorhergehenden Ansprüche, **dadurch gekennzeichnet, daß** die Beaufschlagung mit flüssigemWasser in einem Temperaturintervall von 5 bis 95°C, und die Beaufschlagung mit Wasserdampf enthaltender Atmosphäre in einem Temperaturintervall von 20 bis 95 °C erfolgt.

**6.** Verfahren nach einem der vorhergehenden Ansprüche, **dadurch gekennzeichnet, daß** die das Salz enthaltende (n) Komponente(n) B einen Wassergehalt von 0,10 bis 1,8 Gew.-% bezogen auf die Komponente(n) B nach Beaufschlagung aufweisen.

**7.** Verfahren nach einem der vorhergehenden Ansprüche, **dadurch gekennzeichnet, daß** die Zusammensetzungen enthalten

A) 30 bis 85 Gew.-Teile, bezogen auf die Summe aus A und B,
B) 15 bis 70 Gew.-Teile, bezogen auf die Summe aus A und B,
C) 0,3 bis 7 Gew.-Teile, bezogen auf die Summe aus A und B.

**8.** Verfahren nach einem der vorhergehenden Ansprüche, **dadurch gekennzeichnet, dass** das Salz ein Alkali-, Erdalkali- oder Aluminiumchlorid oder ein Alkali-, Erdalkali- oder Aluminiumsulfat, oder eine Mischung daraus ist.

**9.** Verfahren nach einem der vorhergehenden Ansprüche, **dadurch gekennzeichnet, dass** das Salz Magnesiumsulfat ist.

**10.** Verfahren nach einem der vorhergehenden Ansprüche, **dadurch gekennzeichnet, dass** die Beaufschlagung mit Wasserdampf enthaltender Atmosphäre bei einer Temperatur von 20 bis 95°C und bei einer relativen Luftfeuchtigkeit von mindestens 70% erfolgt.

**11.** Verfahren nach einem der vorhergehenden Ansprüche, **dadurch gekennzeichnet, dass** die Zusammensetzung als Komponente C mindestens einen Vertreter ausgewählt aus der Gruppe bestehend aus Flammschutzmitteln, Flammschutzsynergisten, rauchhemmenden Additiven, Antidrippingmitteln, internen und externen Gleit- und Entformungsmitteln, Fließfähigkeitshilfsmitteln, Antistatika, Leitfähigkeitsadditiven, UV-Stabilisatoren, Licht-Stabilisatoren, Thermostabilisatoren, Antioxidantien, Umesterungsinhibitoren, Hydrolyseschutzmittel, antibakteriell wirkenden Additiven, kratzfestigkeitsverbessernden Additiven, IR-Absorbentien, optischen Aufhellern, fluoreszierenden Additiven, Füll- und Verstärkungsstoffen, Säuren sowie Farbstoffen und Pigmenten enthält.

**12.** Verfahren nach einem der vorhergehenden Ansprüche, **dadurch gekennzeichnet, daß** die Gesamtheit der Komponenten A und C sowie die Restmengen der Komponente B der Zusammensetzung bereits im Verfahrensschritt (b) zugesetzt, durch den Knetvorgang ineinander dispergiert und das im Verfahrensschritt a) in das Verfahren eingebrachte Wasser durch Anlegen eines Unterdrucks von mindestens 200 mbar wieder aus dem Produkt entfernt wird.

**13.** Verfahren nach einem der vorhergehenden Ansprüche, **dadurch gekennzeichnet, dass** die Komponente B aus

mindestens zwei Komponenten ausgewählt aus der Gruppe bestehend aus B1, B2 und B3 besteht.

**14.** Zusammensetzung hergestellt nach einem Verfahren gemäß einem der Ansprüche 1 bis 13.

**15.** Formkörper oder Formteile aus einer Polymerzusammensetzung hergestellt nach einem Verfahren der Ansprüche 1 bis 13 mit Class-A-Oberfläche und partiellem oder vollständigem Hochglanz-Finish, **gekennzeichnet durch** einen Glanzgrad in diesen Hochglanzbereichen von mindestens 95 ermittelt in Reflexion gemäß DIN 67530 bei einem Messwinkel von 60°, welche gegebenenfalls partiell oder vollständig einem weiteren Oberflächenbehandlungsschritt **durch** beispielsweise Lackierung, Folienhinterspritzung, Metallisierung **durch** Vakuumbedampfung oder Galvanisierung unterzogen sein können.

Europäisches Patentamt
European Patent Office
Office européen des brevets

# EUROPÄISCHER RECHERCHENBERICHT

Nummer der Anmeldung
EP 12 16 5141

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | WO 2010/094416 A1 (BAYER MATERIALSCIENCE AG [DE]; SEIDEL ANDREAS [DE]; THIEM HANS-JUERGEN) 26. August 2010 (2010-08-26) * Ansprüche 1-16; Beispiele 2,3,5,7,8,9 * ----- | 1-14 | INV. C08F2/22 C08L55/02 C08L69/00 |
| X | WO 2009/023115 A2 (BAYER MATERIALSCIENCE LLC [US]; ROGUNOVA MARINA [US]; CHEUNG JAMES Y J) 19. Februar 2009 (2009-02-19) * Beispiel 20 * ----- | 15 | |
| X | EP 0 845 496 A2 (BAYER AG [DE]) 3. Juni 1998 (1998-06-03) * Beispiele 1-12 * ----- | 14 | |
| X | US 6 716 916 B1 (SUN LIQING-LEE [US] ET AL) 6. April 2004 (2004-04-06) * Anspruch 1; Beispiele 5,7; Tabelle 1 * ----- | 14 | |
| A | WO 2009/129962 A1 (BAYER MATERIALSCIENCE AG [DE]; AVTOMONOV EVGUENI [DE]; SEIDEL ANDREAS) 29. Oktober 2009 (2009-10-29) * Seite 30, Zeile 20 - Seite 31, Zeile 16; Beispiele 1-23 * ----- | 1-15 | RECHERCHIERTE SACHGEBIETE (IPC) C08F C08L |
| A | EP 0 590 847 A1 (GEN ELECTRIC [US]) 6. April 1994 (1994-04-06) * Seite 6, Zeile 56 - Seite 7, Zeile 22; Anspruch 9; Beispiel 1; Tabelle 1 * ----- | 1-15 | |

Der vorliegende Recherchenbericht wurde für alle Patentansprüche erstellt

| Recherchenort | Abschlußdatum der Recherche | Prüfer |
|---|---|---|
| München | 31. Juli 2012 | Adams, Florian |

2

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 12 16 5141

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-07-2012

| Im Recherchenbericht angeführtes Patentdokument | Datum der Veröffentlichung | Mitglied(er) der Patentfamilie | Datum der Veröffentlichung |
|---|---|---|---|
| WO 2010094416 A1 | 26-08-2010 | CA 2752680 A1 | 26-08-2010 |
| | | CN 102325827 A | 18-01-2012 |
| | | DE 102009009680 A1 | 26-08-2010 |
| | | EP 2398842 A1 | 28-12-2011 |
| | | KR 20110129867 A | 02-12-2011 |
| | | TW 201041941 A | 01-12-2010 |
| | | US 2010210789 A1 | 19-08-2010 |
| | | WO 2010094416 A1 | 26-08-2010 |
| WO 2009023115 A2 | 19-02-2009 | CA 2695565 A1 | 19-02-2009 |
| | | CN 101802094 A | 11-08-2010 |
| | | EP 2178978 A2 | 28-04-2010 |
| | | JP 2010535930 A | 25-11-2010 |
| | | KR 20100044833 A | 30-04-2010 |
| | | TW 200920787 A | 16-05-2009 |
| | | US 2009043038 A1 | 12-02-2009 |
| | | WO 2009023115 A2 | 19-02-2009 |
| EP 0845496 A2 | 03-06-1998 | AR 010316 A1 | 07-06-2000 |
| | | AU 738243 B2 | 13-09-2001 |
| | | AU 4688997 A | 04-06-1998 |
| | | BR 9706037 A | 06-07-1999 |
| | | CN 1188118 A | 22-07-1998 |
| | | DE 19649255 A1 | 04-06-1998 |
| | | EP 0845496 A2 | 03-06-1998 |
| | | ES 2210447 T3 | 01-07-2004 |
| | | JP 4181652 B2 | 19-11-2008 |
| | | JP 10158343 A | 16-06-1998 |
| | | US 5883189 A | 16-03-1999 |
| US 6716916 B1 | 06-04-2004 | AR 028484 A1 | 14-05-2003 |
| | | AU 7278300 A | 26-03-2001 |
| | | CA 2386703 A1 | 08-03-2001 |
| | | CN 1387552 A | 25-12-2002 |
| | | DE 19941491 A1 | 15-03-2001 |
| | | DE 50011703 D1 | 29-12-2005 |
| | | EP 1214375 A1 | 19-06-2002 |
| | | ES 2248111 T3 | 16-03-2006 |
| | | JP 2003508572 A | 04-03-2003 |
| | | MX PA02002201 A | 07-11-2002 |
| | | RU 2002108177 A | 10-11-2003 |
| | | TW 562833 B | 21-11-2003 |
| | | US 6716916 B1 | 06-04-2004 |
| | | WO 0116230 A1 | 08-03-2001 |
| WO 2009129962 A1 | 29-10-2009 | CA 2722228 A1 | 29-10-2009 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT ÜBER DIE EUROPÄISCHE PATENTANMELDUNG NR.** EP 12 16 5141

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-07-2012

| Im Recherchenbericht angeführtes Patentdokument | Datum der Veröffentlichung | Mitglied(er) der Patentfamilie | Datum der Veröffentlichung |
|---|---|---|---|
| | | CN 102015891 A | 13-04-2011 |
| | | EP 2285905 A1 | 23-02-2011 |
| | | JP 2011518904 A | 30-06-2011 |
| | | KR 20100135836 A | 27-12-2010 |
| | | RU 2010147711 A | 27-05-2012 |
| | | TW 201005033 A | 01-02-2010 |
| | | US 2009281216 A1 | 12-11-2009 |
| | | WO 2009129962 A1 | 29-10-2009 |
| EP 0590847 A1 | 06-04-1994 | DE 69312002 D1 | 14-08-1997 |
| | | DE 69312002 T2 | 22-01-1998 |
| | | EP 0590847 A1 | 06-04-1994 |
| | | JP 3124874 B2 | 15-01-2001 |
| | | JP 6184395 A | 05-07-1994 |
| | | US 5336701 A | 09-08-1994 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 459161 B1
- DE 2021398
- DE 2815098
- WO 2009071537 A
- WO 9828344 A
- EP 2398842 A1
- DE 1495626 B
- DE 2232877 A
- DE 2703376 A
- DE 2714544 A
- DE 3000610 A
- DE 3832396 A
- DE 3077934 A
- DE 2842005 A
- US 3419634 A
- DE 3334782 A
- DE 2940024 A
- DE 3007934 A
- EP 363608 A
- EP 640655 A
- US PS5844028 A
- EP 728811 A
- DE 1961668 A
- WO 9740092 A
- EP 2398842 A


### In der Beschreibung aufgeführte Nicht-Patentliteratur


- Chemistry and Physics of Polycarbonates. Interscience Publishers, 1964
- **W. SCHOLTAN ; H. LANGE ; KOLLOID, Z.** *Z. Polymere,* 1972, vol. 250, 782-1796
- **M. HOFFMANN ; H. KRÖMER ; R. KUHN.** Polymeranalytik I und II. Georg Thieme-Verlag, 1977
- Ullmanns Enzyklopädie der technischen Chemie. 1979, vol. 18, 301 ff
- **HOUBEN-WEYL.** *Methoden der organischen Chemie,* vol. 12, 1, 43
- *Beilstein,* vol. 6, 177